# EUROPEAN PATENT APPLICATION

(11) **EP 2 804 094 A1**
(43) Date of publication of application: **19.11.2014**
(21) Application number: 13167543.1
(22) Date of filing: 13.05.2013
(51) Int. Cl.: G06F 3/14, H04L 29/08, G06F 9/44, G06T 15/00, G09G 5/36, G09G 5/00

(54) **A system and method for forwarding a graphics command stream**

(71) Applicant: 2236008 Ontario Inc., Waterloo, ON N2K 0A7 (CA)
(72) Inventor: Dodge, Danny Thomas, Kanata, Ontario K2K 0B3 (CA); Belanger, Etienne, Kanata, Ontario (CA)
(74) Representative: Noble, Nicholas

(57) **Abstract**

A system and method for forwarding a graphics command stream. A graphics renderer may receive a graphics command stream where the graphic command stream contains graphical information renderable as a graphical image. The graphics renderer may process the received graphics command stream to generate a processed graphics stream where the processed graphics stream contains equivalent graphical information to the graphical information contained in the graphics command stream. A source redirector may encode the processed graphics stream to generate a formatted graphics stream. A source protocol stack may send the formatted graphics stream to a target graphics component. A target redirector may receive and decode the formatted graphics stream. The target redirector may process the decoded formatted graphics stream to generate a target graphics command stream where the target command stream contains equivalent graphical information contained in the formatted graphics stream.

## Description

### BACKGROUND

### 1. Technical Field

The present disclosure relates to the field of rendering graphical images. In particular, to a system and method for forwarding a graphics command stream.

### 2. Related Art

Efficiently transmitting display content from a source device to for display on a destination device is possible using a combination of networking and video compression technologies. Typically, a source device (mobile phone, multimedia player, etc.) creates content (game, movie, user interface, etc.) that is compressed with a video encoder and transmitted to the target device (television, receiver, etc.) over a wired or wireless network. The target device decodes the compressed video and displays the content on a display local to the target device. Video compression is utilized because some networking technologies may not be fast enough to transport raw uncompressed images.

In many applications the combination of wireless network and video compression system works well. For example, watching a movie stored on a local source device on a large display connected to a target device. There are a number of drawbacks related to the described wireless video system including overall end-to-end latency and quality. Both the video encoder and decoder introduce latency to lower the bitrate transmitted over the wireless network and the destination device typically introduces buffering to provide a smooth playback experience. The delay may be noticeable. The video compression system reduces the transmission throughput requirement by lowering the quality of the content. Complex and fast motion graphics may appear degraded on the destination display in addition to a noticeable delay.

It is desirable to have a mechanism for having a graphical image (e.g. a user interface generated by an application) generated on a first platform displayed on a second platform while mitigating issues such as those relating to latency and image quality described above.

### BRIEF DESCRIPTION OF DRAWINGS

The system may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.

Fig. 1 is a schematic representation of a system for forwarding a graphics command stream.

Fig. 2 is a representation of a method for forwarding a graphics command stream.

Fig. 3 is a schematic representation of a system for forwarding a graphics command stream.

Fig. 4 is a further representation of a method for forwarding a graphics command stream

Fig. 5 is a further schematic representation of a system for forwarding a graphics command stream.

### DETAILED DESCRIPTION

A system and method for forwarding a graphics command stream. A source graphics renderer may receive a source graphics command stream, encoded for rendering by a source graphics component using a source graphics semantic, where the source graphic command stream contains graphical information renderable as a graphical image. The source graphics renderer may process the received source graphics command stream to generate a processed graphics stream where the processed graphics stream contains equivalent graphical information to the graphical information contained in the source graphics command stream. A source redirector may encode the processed graphics stream to generate a source formatted graphics stream. The source protocol stack may send the source formatted graphics stream to a target graphics component where the source formatted graphics stream is convertible to a target graphics semantic renderable as a graphical image by the target graphics component. A target redirector may receive a target formatted graphics stream, encoded using an intermediate graphic semantic, where the target formatted graphics stream contains graphical information renderable as a graphical image. The target redirector may decode the target formatted graphics stream. The target redirector may process the decoded target formatted graphics stream to generate a target graphics command stream, encoded for rendering by a target graphics component using a target graphics semantic, where the target command stream contains equivalent graphical information contained in the target formatted graphics stream.

Many computing devices contain relatively sophisticated processors that may include both a central processing unit (CPU) and a graphics processing unit (GPU). Different vendors may design and produce GPUs where the application programming interface (API) is usually standardized in order to simplify application development. Popular standardized graphics APIs may include OPENGL (Open Graphics Library), OPENGL ES, OPENCL and OPENVG formats standardized by The Khronos Group. OPENGL® is a registered trademark of Silicon Graphics, Inc. of Mountain View, California. Applications may utilize a standardized graphics API, or graphics API, to render graphical images for display where the rendering is accelerated by the GPU. Alternatively, the CPU may perform the rendering in software. The graphics API does not have to be standardized. An application utilizing the graphics API sends commands, or a graphics command stream, to the GPU that in turn renders a graphical image into a memory buffer. The graphics API allows the GPU to return responses to the application. The amount of data contained within the graphics command stream is typically much lower than the amount of data utilized by the GPU to render the graphical image or the rendered graphical image.

The rendered graphical image may be transmitted to a remote, or target device utilizing networking and video encoding technology as described in the prior art. The target device decodes the compressed video stream and presents the image on a display. The source device encodes a graphical image, or a sequence of graphical images that have already been rendered.

Alternatively, when the target device has a GPU, the graphics command stream created by the application executing on the source device may be rendered by the GPU on the target device. In this case the rendering occurs on the target device as compared to rendering and video encoding the result on the source device. The amount of data contained within the graphics command stream is typically much lower than the amount of data utilized by the GPU to render the graphical image or the rendered graphical image. Encoding and transmitting the graphics command stream for rendering on a target device may reduce the latency and provide a better quality rendering when compared to the results of using a video encoder. Transmitting the graphics command stream may result in less network utilization than the compressed video stream.

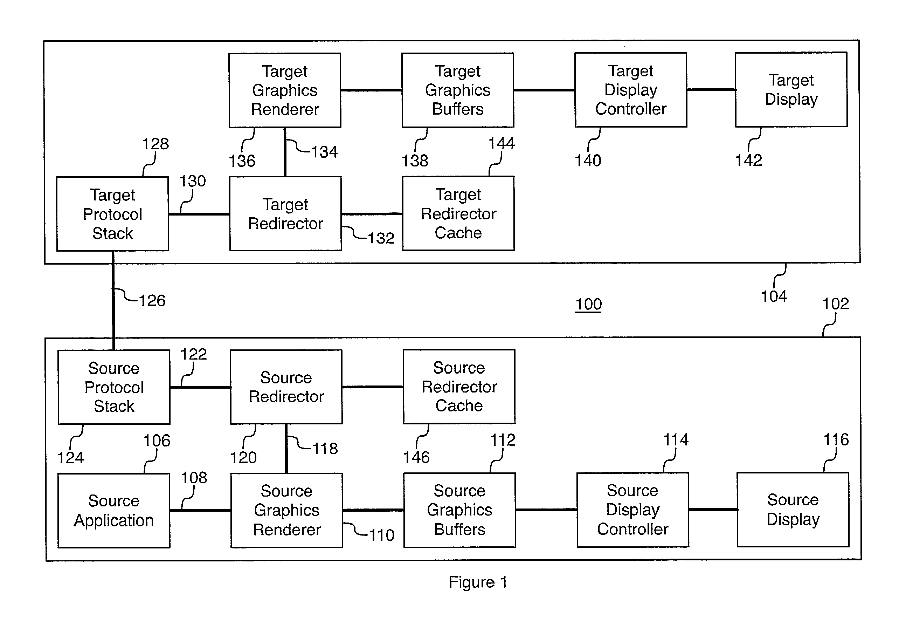

Figure 1 is a schematic representation of a system for forwarding a graphics command stream. The system 100 may include a source graphics component 102 and a target graphics component 104. The source graphics component 102 and the target graphics component may be executing on separate computing devices. For example, the source graphics component 102 may be executing on a mobile phone while the target graphics component 104 may be a laptop computer. The mobile phone executing the source graphics component 102 may utilize a different operating system than the laptop computer executing the target graphics component 104. In another example, both the source graphics component 102 and the target graphics component 104 may be executing on the same computing device. The source graphics component 102 and the target graphics component 104 may comprise the same, similar or different CPUs and the same, similar or different GPUs.

The source graphics component 102 may include a source application 106 that communicates with a source graphics renderer 110 using a source graphics command stream 108. The source application 106 utilizes the source graphics command stream 108 to issue commands that instructs the source graphics renderer 110 to render graphical images. The source graphics command stream 108 may be in a graphical API format utilized by the source graphics renderer 110. For example, the graphical API format of the source graphics command stream 108 may be OPENGL. The graphical API format may be referred to as a source graphics semantic and the source graphics command stream 108 may be referred to as a graphics command stream. The source graphics command stream 108 may contain both commands and data sent by the source application 106 to the source graphics renderer 110. The source graphics command stream 108 may contain both responses and data returned by the source graphics renderer 110 to the source application 106. The content in the graphics command stream between the source application 106 and the source graphics renderer 110 may be referred to as graphical information. The source graphics renderer 110 may be capable of executing the commands contained within the graphics command stream 110 and rendering a graphical image into one or more of the source graphics buffers 112. The source graphics renderer 110 may be a software implementation where the CPU performs the rendering or an implementation where the GPU performs the rendering. Utilizing a graphical API, or graphics semantic, allows the source application 106 to be agnostic of the implementation details of the source graphics renderer 110 to produce the same graphical image.

The source graphics renderer 110 uses the graphical information sent by the source application 106 to render a graphical image into one or more of the source graphics buffers 112. The graphical image may be, for example, a user interface (UI), a computer game or a web browser. The graphical image in the source graphics buffers 112 may be shown on a source display 116 using a source display controller 114. The source display controller 114 may show one or more source graphics buffers 112 on the source display 116. The source graphics component 102 may utilize the source application 106, the source graphics renderer 110, the source graphics buffers 112, and the source display controller 114 to renderer a graphical image locally on the source display 116.

A different approach may be utilized for the source graphics component 102 to display the graphical image on a target display 142 associated with the target graphics component 104. One approach may comprise sending, or forwarding, the source graphics command stream 108 to the target graphics component 104. Forwarding the source graphics command stream 108 created by the source application 106 may comprise the source application 106 send the graphics command stream 108 to the source graphics renderer 110. The source graphics renderer 110 may process the source graphics command stream 108 to create a processed graphics stream 118. The processed graphics stream 118 may be derived from a logging stream output by the source graphics renderer 110 or another output of the source graphics renderer 110. The processed graphics stream 118 may contain equivalent graphical information to create the same graphics image as the source graphics command stream 108.

A source redirector 120 receives the processed graphics stream 118. The processed graphics stream 118 may contain graphical information similar or equivalent to the source graphics command stream 108 although neither the actual content nor the sequence of the two streams may be identical. In one example, the processed graphics stream 118 may be identical to the source graphics command stream 108. The source graphics renderer 110 may modify the graphical information, for example, to reduce redundancy of commands. For example, the source application 106 may send a repeated request to set the background color. The source graphics renderer 110 may only process the first request and remove the repeated requests from the processed graphics stream 118 when the request is the same or redundant.

The source redirector 120 may receive the processed graphics stream 118 and encode a source formatted graphics stream 122. The source redirector 120 may further process the graphical information received in the processed graphics stream 118. Further processing may include, for example, reducing redundancy of the graphical information, compressing the graphical information and responding to commands in the graphical information. Compressing graphical information may reduce the size of the graphical information encoded into the source formatted graphics stream 122. For example, a set of vertices may be compressed before they are encoded into the source formatted graphics stream 122. A lossless compression technique including run length encoding may be utilized. A lossy compression scheme may be applied to some textures. The source redirector 120 may utilize a source redirector cache 146 for processing the graphical information. The source redirector cache 146 may be a memory that is accessed and controlled by the source redirector 120 or the source redirector cache 146 may be any component that may store graphical information. The source redirector 120 may, for example, use graphical information stored in the source redirector cache 146 to send a response to the source graphics renderer 110 instead of encoding the request for response in the formatted graphics stream 122.

The source formatted graphics stream 122 may contain equivalent graphical information to create the same graphics image as the source graphics command stream 108 and additional metadata for decoding on the target graphics component 104. The metadata may include, for example, initialization instructions, synchronization information, timing information, error correction codes, retransmission requests, or other similar metadata. The source formatted graphics stream 122 may interleave the graphical information with the additional metadata. The source formatted graphics stream 122 may be in the format of an intermediate graphics semantic.

The graphical information predominately flows forward from the source graphics component 102 to the target graphics component 104 where the graphical information contains commands and data that may be rendered into a graphical image using the target graphics component 104. Graphical information may also flow backwards from the source graphics component 102 to the target graphics component 104 where the graphical information contains responses and data. For example, the source application 106 may send a command that requests the current background color. The response containing the current background color may be returned via the source formatted graphics stream 122, the processed graphics stream 118 and the source graphics command stream 108. Some responses may have a large amount of data when, for example, the source application 106 sends a command that requests the complete rendered graphical image. The graphical information may flow in both directions so each of the subcomponents handling graphical information described herein may handle bidirectional communication. For example, the source redirector 120 may receive and decode the source formatted graphics stream 122 where the decoding may be similar to the decoding in the target redirector 132 described below.

A source protocol stack 124 may transmit the source formatted graphics stream 122 to the target graphics component 104 as a protocol stream 126. The source protocol stack 124 may be, for example, a Transmission Control Protocol /Internet Protocol (TCP/IP) stack. The protocol stream 126 may be delivered using a TCP or a User Datagram Protocol (UDP). When UDP is used as the transport mechanism for the formatted graphics stream 122, the formatted graphics stream 122 may include metadata that both the source graphics component 102 and the target graphics component 104 may use to determine packet order or to identify missing packets in the protocol stream 126. The protocol stream 126 may be transported using wireless or wired networks that may include, for example, Ethernet, WI-FI® or BLUETOOTH®. WI-FI® is a registered trademark of Wireless Ethernet Compatibility Alliance, Inc. of Austin, Texas. BLUETOOTH® is a registered trademark of the Bluetooth Special Interest Group of Kirkland, Washington. In an example embodiment target graphics component 104 may comprise one or more processes executing on the same computing device as the source graphics component 102 in which case the protocol stream 126 may be transported by a communication method in the operating system such as, for example, an inter-process messaging mechanism.

A target protocol stack 128 executing as part of the target graphics component 104 receives the protocol stream and outputs a target formatted graphics stream 130. The target protocol stack 128 may provide the same or similar networking services as the source protocol stack 128. For example both the target protocol stack 128 and the source protocol stack 128 may utilize TCP/IP. The target formatted graphics stream 130 may be identical to the source formatted graphics stream 122, for example, when the protocol stream 126 contains no transmission errors.

A target redirector 132 may receive the target formatted graphics stream 130. The target redirector 132 decodes the target formatted graphics stream 130 into a target graphics command stream 134. The target formatted graphics stream 130 may be in the format of the intermediate graphics semantic. The target graphics command stream 134 may be in the format of a graphical API, or target graphics semantic. The target graphics command stream 134 may be in the same graphics API format as the source graphics command stream 108 created by the source application 106. Alternatively, the target redirector 132 may create a target graphic command stream 134 utilizing a different graphics API. The target redirector 132 may convert or translate the graphical information between two different graphics APIs. The target graphics command stream 134 may be identical to the source graphics command stream 108 although processing in the source graphics renderer 110, the source redirector 120 and the target redirector 132 may result in the target graphics command stream 134 and the source graphics command stream 108 to be different. The target graphics command stream 132 may contain equivalent graphical information to create the same or a similar graphics image as the source graphics command stream 108.

The target redirector 132 may receive the target formatted graphics stream 130 and process the metadata contained therein. For example, the target redirector 132 may use the metadata to initialize the internal decoding states, apply error correction codes, reorder the stream into the correct sequence or request retransmission of missing graphical content. The target redirector 132 may decode and reverse the processing performed by the source redirector 120. For example, the target redirector 132 may decompress graphics information that may have been compressed by the source redirector 120 in order to restore the graphical information.

The target redirector 132 may utilize a target redirector cache 144 similar to the source redirector cache 146 to store graphical information. The stored graphical information in the target redirector cache 144 may be utilized to reduce the amount of graphical information transmitted between the source graphics component 102 and the target graphics component 104. When the source redirector 120 is aware of the contents in the target redirector cache 144, the source redirector 120 may encode an instruction to the target redirector 132 to use the stored graphical information instead of sending the graphical information in the source formatted graphics stream 122. Encoding an instruction to utilize graphical information in a cache 144 may reduce the amount of data transmitted between the source graphics component 102 and the target graphics component 104.

The source redirector 120 and the target redirector 132 may synchronize the source redirector cache 146 and the target redirector cache 144 by storing the most recent graphical commands. A finite number of graphical commands may be stored or a fixed amount of storage may be used. Alternatively, metadata in the source formatted graphics stream 122 and the target formatted graphics stream 130 may be used to dynamically manage the graphical information in the source redirector cache 146 and the target redirector cache 144.

The target redirector 132 sends the target graphics command stream 134 to a target graphics renderer 136. The target graphics renderer 136 may provide similar functionality to that of source graphics renderer 110 although the target graphics renderer 136 need not be implemented with identical software or hardware to that of the source graphics renderer 110. The target graphics renderer 136 receives the target graphics command stream 134 from the target renderer 132. The target redirector 132 may appear to the target graphics renderer 134 as another application sending graphical information.

The target redirector 132 sends and receives the target graphical command stream 134 to and from the target graphics renderer 136. The target redirector 132 may encode the received target graphical command stream 134 to generate the target formatted graphics stream 130. The target redirector 132 may apply similar processing of the graphics information to that of the source redirector 120. For example, the target redirector 132 may compress the graphics information. The target redirector 132 may add metadata to the target formatted graphics stream 130.

The target graphics renderer 134 uses the graphical information sent by the target redirector 132 to render a graphical image into one or more of the target graphics buffers 138. The graphical image may comprise, for example, a user interface (UI), a computer game or an animation. The graphical image in the target graphics buffers 138 may be shown on a target display 142 using a target display controller 140. The target display controller 140 may show one or more target graphics buffers 138 on the target display 142. The target graphics component 104 may utilize the target redirector 132, the target graphics renderer 136, the target graphics buffers 138, and the target display controller 140 to renderer a graphical image on the target display 142.

The characteristics of the source display 116 and the target display 142 need not be identical. For example, the resolution of the source display 116 and the target display 142 may be different. The source graphics command stream 108 may be rendered and displayed on the source display 116 and one or more target displays 142 concurrently. When the source graphics command stream 108 is rendered to multiple displays that have the same characteristics, the source application 106 may be unaware that multiple displays are rendering the graphical image. In some cases, the source application 106 may create a source graphics command stream 108 that conforms to the characteristics of a particular display. For example, the source application 106 may generate a graphical image that matches the resolution of the particular display. When the source graphics command stream 108 is rendered to multiple displays with different characteristics, the source application 106 may generate one or more source graphics command streams 108 or another graphical component may adjust the rendering of a single graphics command stream 108 to the characteristics of differing displays. The source application 106 may generate a source graphics command stream 108 for each display or a source graphics command stream 108 for each display that has a different display characteristic. Another graphical component may adjust the rendered graphical image for the display. For example, the target display controller 140 may resize the rendered graphical image before sending to the target display 142.

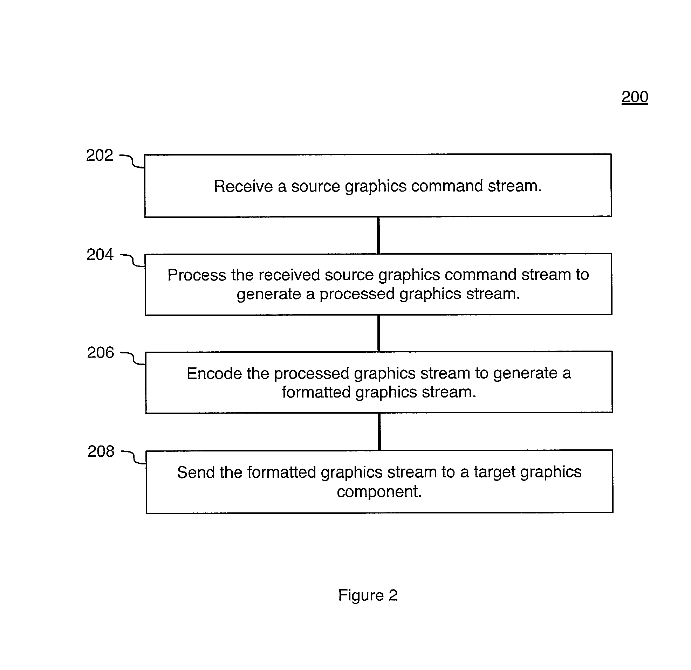

Figure 2 is a representation of a method for forwarding a graphics command stream. The method 200 may be, for example, implemented using the system 100 described herein with reference to Figure 1. The method 200 includes the act of receiving a source graphics command stream 108, encoded for rendering by a source graphics component 104 using a source graphics semantic, where the source graphic command stream 108 contains graphical information renderable as a graphical image 202. The received source graphics command stream 108 may be processed to generate a processed graphics stream 118 where the processed graphics stream contains equivalent graphical information to the graphical information contained in the source graphics command stream 204. The processed graphics stream 118 may be encoded to generate a formatted graphics stream 206. The source formatted graphics stream 122 may be in the format of an intermediate graphics semantic. The formatted graphics stream 122 may be sent to a target graphics component 104 where the formatted graphics stream 122 is convertible to a target graphics semantic renderable as a graphical image by the target graphics component 208. The act of sending 208 may further comprise transmitting the formatted graphics stream 122 as a protocol stream 126 or as an inter-process message sequence.

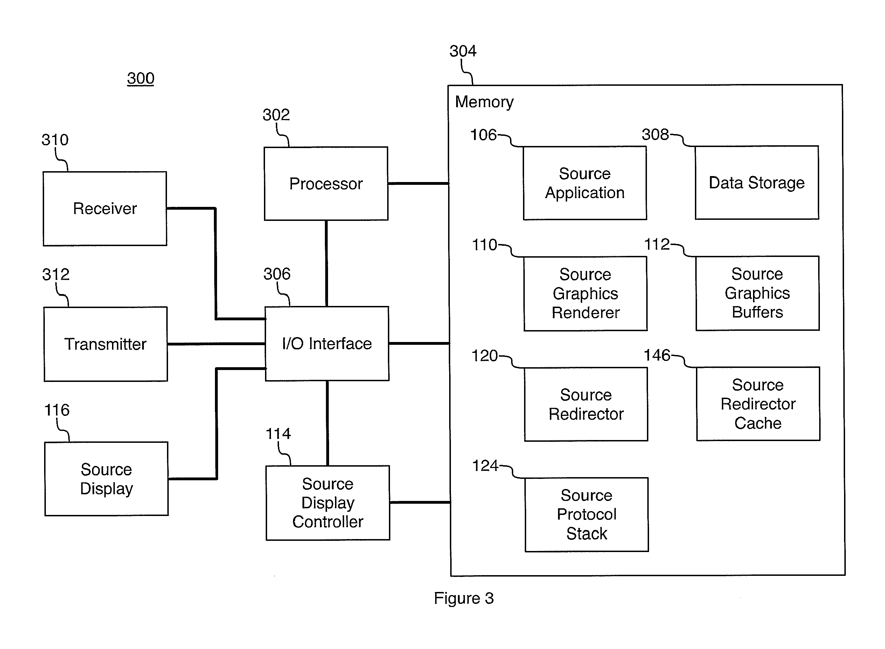

Figure 3 is a schematic representation of a system for forwarding a graphics command stream embodied in the source graphic component 102. The system 300 comprises a processor 302, memory 304 (the contents of which are accessible by the processor 302) and an I/O interface 306. The memory 304 may store instructions which when executed using the processor 302 may cause the system 300 to render the functionality associated with forwarding a graphics command stream as described herein. For example, the memory 304 may store instructions which when executed using the processor 302 may cause the system 300 to render the functionality associated with the source application 106, the source graphics renderer 110, the source redirector 120, the source redirector cache 146 and the source protocol stack 124 as described herein. In addition, data structures, temporary variables and other information may store data in data storage 308.

The processor 302 may comprise a single processor or multiple processors that may be disposed on a single chip, on multiple devices or distributed over more that one system. The processor 302 may be hardware that executes computer executable instructions or computer code embodied in the memory 304 or in other memory to perform one or more features of the system. The processor 302 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 304 may comprise a device for storing and retrieving data, processor executable instructions, or any combination thereof. The memory 304 may include non-volatile and/or volatile memory, such as a random access memory (RAM), a read-only memory (ROM), an erasable programmable read-only memory (EPROM), or a flash memory. The memory 304 may comprise a single device or multiple devices that may be disposed on one or more dedicated memory devices or on a processor or other similar device. Alternatively or in addition, the memory 304 may include an optical, magnetic (hard-drive) or any other form of data storage device.

The memory 304 may store computer code, such as the source application 106, the source graphics renderer 110, the source redirector 120, the source redirector cache 146 and the source protocol stack 124 as described herein. The computer code may include instructions executable with the processor 302. The computer code may be written in any computer language, such as C, C++, assembly language, channel program code, and/or any combination of computer languages. The memory 304 may store information in data structures including, for example, vertices. The memory 304 may store graphical images in the source graphics buffers 112.

The I/O interface 306 may be used to connect devices such as, for example, a source receiver 310, a source transmitter 312, the source display controller 114, the source display 116 and to other components of the system 300.

All of the disclosure, regardless of the particular implementation described, is exemplary in nature, rather than limiting. The system 300 may include more, fewer, or different components than illustrated in Figure 3. Furthermore, each one of the components of system 300 may include more, fewer, or different elements than is illustrated in Figure 3. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

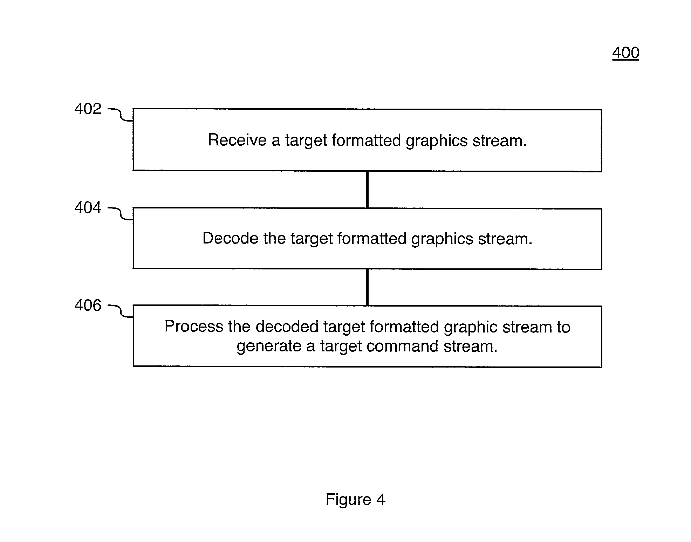

Figure 4 is a further representation of a method for forwarding a graphics command stream. The method 400 may be, for example, implemented using the system 100 described herein with reference to Figure 1. The method 400 includes the act of receiving a target formatted graphics stream 130, encoded using an intermediate graphic semantic, where the target formatted graphics stream contains graphical information renderable as a graphical image 402. The act of receiving 402 may further comprise receiving a protocol stream 126 or as an inter-process message sequence and converting it to the target formatted graphics stream 130. The target formatted graphics stream 130 may be decoded 404. The decoded target formatted graphics stream may be processed to generate a target graphics command stream 134, encoded for rendering by the target graphics component 104 using a target graphics semantic, where the target graphics command stream 134 contains equivalent graphical information contained in the target formatted graphics stream 406. The method 400 may further comprise the act of rendering the target graphics command stream 134 to be shown on a target display 142.

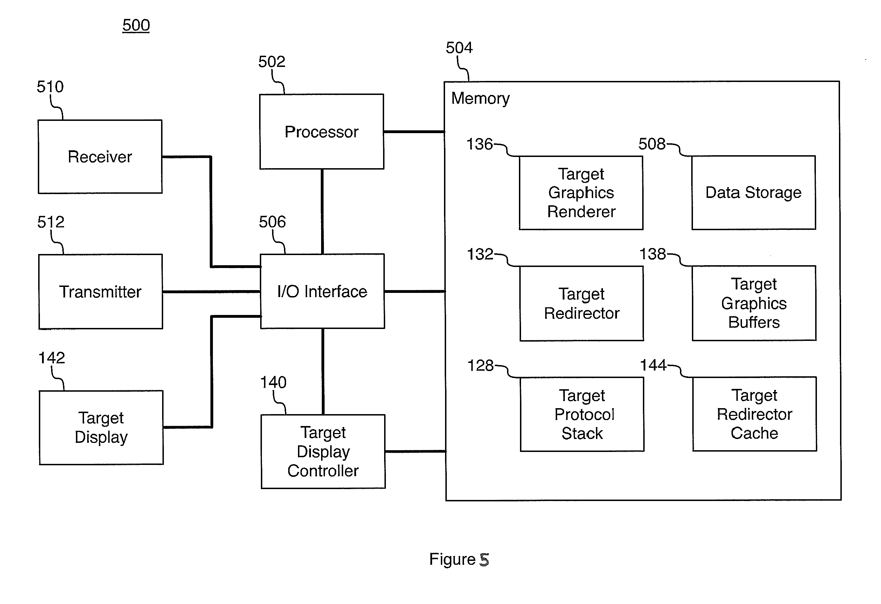

Figure 5 is a further schematic representation of a system for forwarding a graphics command stream embodied in the target graphic component 104. The system 500 comprises a processor 502, memory 504 (the contents of which are accessible by the processor 502) and an I/O interface 506. The memory 504 may store instructions which when executed using the processor 502 may cause the system 500 to render the functionality associated with forwarding a graphics command stream as described herein. For example, the memory 504 may store instructions which when executed using the processor 504 may cause the system 500 to render the functionality associated with the target redirector 132, the target graphics renderer 136, the target redirector cache 144 and the target protocol stack 128 as described herein. In addition, data structures, temporary variables and other information may store data in data storage 508.

The processor 502 may comprise a single processor or multiple processors that may be disposed on a single chip, on multiple devices or distributed over more that one system. The processor 502 may be hardware that executes computer executable instructions or computer code embodied in the memory 504 or in other memory to perform one or more features of the system. The processor 502 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 504 may comprise a device for storing and retrieving data, processor executable instructions, or any combination thereof. The memory 504 may include non-volatile and/or volatile memory, such as a random access memory (RAM), a read-only memory (ROM), an erasable programmable read-only memory (EPROM), or a flash memory. The memory 504 may comprise a single device or multiple devices that may be disposed on one or more dedicated memory devices or on a processor or other similar device. Alternatively or in addition, the memory 504 may include an optical, magnetic (hard-drive) or any other form of data storage device.

The memory 504 may store computer code, such as the target redirector 132, the target graphics renderer 136, the target redirector cache 144 and the target protocol stack 128 as described herein. The computer code may include instructions executable with the processor 502. The computer code may be written in any computer language, such as C, C++, assembly language, channel program code, and/or any combination of computer languages. The memory 504 may store information in data structures including, for example, vertices. The memory 504 may store graphical images in the target graphics buffers 138.

The I/O interface 506 may be used to connect devices such as, for example, a target receiver 510, a target transmitter 512, the target display controller 140, the target display 142 and to other components of the system 500.

All of the disclosure, regardless of the particular implementation described, is exemplary in nature, rather than limiting. The system 500 may include more, fewer, or different components than illustrated in Figure 5. Furthermore, each one of the components of system 500 may include more, fewer, or different elements than is illustrated in Figure 5. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The components of system 300 and system 500 may be identical when the source graphics component 102 and the target graphics component 104 execute on the same computing device. For example, the memory 304 may store instructions which when executed using the processor 302 may cause the system 300 to render the functionality associated with the target redirector 132, the target graphics renderer 136, the target redirector cache 144 and the target protocol stack 128 as described herein. In addition, data structures, temporary variables and other information may store data in data storage 508 that may be stored in memory 304.

The system and method for forwarding a graphics command stream have been described using as an illustrative example a single graphics command stream forwarded from the source graphics component 102 to the target graphics component 104. The system and method for forwarding a graphics command stream are also applicable when multiple concurrent graphics command streams are forwarded from the source graphics component 102 to the target graphics component 104, and also when one or more graphics command streams are forwarded from the source graphics component 102 to the target graphics component 104 concurrently with one or more graphics command streams are forwarded from the target graphics component 104 to the source graphics component 102.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for on-demand user control have been described, it will be apparent to those of ordinary skill in the art that many more embodiments and implementations are possible within the scope of the present invention. Accordingly, the invention is not to be restricted except in light of the attached claims and their equivalents.

## Claims

1. A method for forwarding a graphics command stream comprising:
receiving (202) a source graphics command stream (108), encoded for rendering by a source graphics component (102) using a source graphics semantic, where the source graphic command stream (108) contains graphical information renderable as a graphical image;
processing (204) the received source graphics command stream (108) to generate a processed graphics stream (118) where the processed graphics stream (118) contains equivalent graphical information to the graphical information contained in the source graphics command stream (108);
encoding (206) the processed graphics stream (118) to generate a source formatted graphics stream (122); and
sending (208) the source formatted graphics stream (122) to a target graphics component (104) where the source formatted graphics stream (122) is convertible to a target graphics semantic renderable as a graphical image by the target graphics component (104).

2. The method for forwarding a graphics command stream of claim 1, where each of the source graphics semantic and the target graphics semantic is based on any of: OPENGL, OPENGL ES, OPENCL, and OPENVG.

3. The method for forwarding a graphics command stream of claims 1 to 2, where the source graphics semantic and the target graphics semantic are different.

4. The method for forwarding a graphics command stream of claims 1 to 3, where the graphical information may include any of: a command, a response and data.

5. The method for forwarding a graphics command stream of claims 1 to 4, where the graphical information is cached.

6. The method for forwarding a graphics command stream of claims 1 to 5, where the act of processing the received source graphics command stream (108) to generate a processed graphics stream (118) reduces the amount of the graphical information.

7. The method for forwarding a graphics command stream of claim 6, where the act of processing that reduces the amount of graphical information may include any one or more of: applying data compression to the graphical information, returning a cached response and transmitting a code associated with cached graphical information in place of the graphical information.

8. The method for forwarding a graphics command stream of claims 1 to 7, where the source formatted graphics stream (122) includes graphical information and metadata.

9. The method for forwarding a graphics command stream of claim 8, where the metadata includes any one or more of: initialization instructions, synchronization information, timing information, error correction codes and retransmission requests.

10. The method for forwarding a graphics command stream of claims 1 to 9, where the source formatted graphics stream (122) is sent to the target graphics component (104) using a wired or a wireless network.

11. The method for forwarding a graphics command stream of claims 1 to 10, where the source formatted graphics stream (122) is sent to the target graphics component (104) using a transmission control protocol or a user datagram protocol.

12. The method for forwarding a graphics command stream of claims 1 to 11, where the source formatted graphics stream (122) is sent to one or more target graphics components (104).

13. A system for forwarding a graphics command stream, the system comprising:
a processor (302);
a memory (304) coupled to the processor (302) containing instructions,
executable by the processor (302), for performing the instructions executing the steps of any of method claims 1 to 12.
